**Europäisches Patentamt**

**European Patent Office**

**Office européen des brevets**

(19)

(11) Veröffentlichungsnummer: **0 243 294 B1**

# EUROPÄISCHE PATENTSCHRIFT

(12)

(45) Veröffentlichungstag der Patentschrift: **23.10.91**

(51) Int. Cl.5: **G01F 15/00**, F15D 1/04, G01F 1/66

(21) Anmeldenummer: **87730017.8**

(22) Anmeldetag: **17.02.87**

(54) **Durchflussmessanordnung.**

(30) Priorität: **27.02.86 DE 3606684**

(43) Veröffentlichungstag der Anmeldung:
**28.10.87 Patentblatt 87/44**

(45) Bekanntmachung des Hinweises auf die Patenterteilung:
**23.10.91 Patentblatt 91/43**

(84) Benannte Vertragsstaaten:
**AT BE DE FR GB IT NL**

(56) Entgegenhaltungen:
**DE-B- 2 356 779**
**FR-A- 2 509 460**
**GB-A- 223 202**
**GB-A- 729 880**
**US-A- 4 004 615**

(73) Patentinhaber: **SIEMENS AKTIENGESELL-SCHAFT**
**Wittelsbacherplatz 2**
**W-8000 München 2(DE)**

(72) Erfinder: **Wahlbrink, Hartwig, Dr.-Ing.**
**Hördinghauser Strasse 3**
**W-4115 Bad Essen 2(DE)**
Erfinder: **Wiartalla, Werner, Dipl.-Phys.**
**Douglasstrasse 3c**
**W-1000 Berlin 33(DE)**

## Beschreibung

Die Erfindung bezieht sich auf eine Durchflußmeßanordnung mit einem Durchflußmeßgerät und einer diesem vorgeordneten Einrichtung zur Erzeugung einer definierten Einlaufströmung in das Durchflußmeßgerät.

Es ist bekannt, daß Durchflußmeßanordnungen mit einer Strömung mit einem Strömungsprofil beaufschlagt werden müssen, das dem Strömungsprofil entspricht, bei dem das Kalibrieren des Durchflußmeßgerätes erfolgt ist; anderenfalls ergeben sich nicht unerhebliche Meßfehler. Da Durchflußmeßgeräte bei einer laminaren Strömung kalibriert werden, ist es bekannt, in einer Durchflußmeßanordnung dem Durchflußmeßgerät eine Einlaufstrecke vorzuordnen, die als gerades Rohrstück ausgebildet ist und eine Länge aufweist, die etwa dem zehn bis zwanzigfachen des Durchmessers am Einlauf des Durchflußmeßgerätes entspricht.

Ferner ist es bekannt (R. W. Scott "Developments in flow measurement" Band 1, 1982, Seiten 148 bis 153) in einer Einrichtung zur Erzeugung einer definierten Einlaufströmung in das Durchflußmeßgerät sogenannte Gleichrichter zu verwenden. Diese Gleichrichter können beispielsweise axial angeordnete Rohrbündel oder senkrecht zur Strömung angeordnete Gittersiebe sein. Nachteilig ist die Anwendung derartiger Gleichrichter insofern, als sie einen Eingriff in die Strömung verursachen, mit der Folge, daß Druckverluste auftreten. Außerdem können sie verschmutzen und insbesondere im verschmutzten Zustand die Strömung behindern.

Der Erfindung liegt die Aufgabe zugrunde, eine Durchflußmeßanordnung mit einem Durchflußmeßgerät und einer diesem vorgeordneten Einrichtung zur Erzeugung einer definierten Einlaufströmung in das Durchflußmeßgerät vorzuschlagen, bei der die Einrichtung zur Erzeugung einer definierten Einlaufströmung weitgehend druckverlustfrei arbeitet.

Zur Lösung dieser Aufgabe besteht bei einer Durchflußmeßanordnung der eingangs angegebenen Art erfindungsgemäß die Einrichtung zur Erzeugung einer definierten Einlaufströmung aus einem Rohrstück mit einer derart aufgerauhten Innenfläche, daß deren Rauheit einige Prozent des lichten Durchmessers des Rohrstücks beträgt. Die aufgerauhte Innenfläche des Rohrstückes kann dabei in unterschiedlicher Weise ausgebildet sein. Vorteilhafterweise ist die Innenwand des Rohrstückes mit Grübchen, kleinen Mulden oder ähnlichem versehen. Wesentlich ist nämlich, daß durch die besonders aufgerauhte Innenfläche des dem Durchflußmeßgerät vorgeordneten Rohrstücks der Einrichtung zur Erzeugung einer definierten Einlaufströmung die Reibung des dem Durchflußmeßgerät zuströmenden Mediums an der Wandung erhöht wird, was zwangsläufig zu Turbulenzen führt, welche den Strömungsverlauf der ankommenden Teilchen der Strömung aufheben. Ist also bei der Kalibrierung eines bei der erfindungsgemäßen Durchflußmeßanordnung eingesetzten Durchflußmeßgerätes mit einer turbulenten Strömung gearbeitet worden, dann ergeben sich bei Verwendung einer Einrichtung zur Erzeugung einer definierten Einlaufströmung gemäß der Erfindung entsprechende Verhältnisse, und die Messung mittels des Durchflußmeßgerätes erfolgt weitgehend unabhängig vom Strömungsverlauf vor der erfindungsgemäßen Durchflußmeßanordnung und druckverlustfrei.

Es ist zwar aus der DE-AS 23 56 779 ein rohrförmiger Dralldurchflußmesser bekannt, bei dem die Innenwand des Meßrohres im von der Drallvorrichtung bis zum Meßfühler reichenden Bereich mit einer in Hauptdurchflußrichtung des Mediums wirksam werdenden Rauheit versehen ist, jedoch ist bei diesem bekannten Durchflußmesser die Rauheit im Bereich des Meßrohres und damit des Durchflußmessers selbst vorhanden, um den eichfähigen Meßbereich des bekannten Dralldurchflußmessers zu vergrößern.

Bei der erfindungsgemäßen Durchflußmeßanordnung können als Durchflußmeßgeräte Geräte eingesetzt werden, die nach unterschiedlichen Meßprinzipien arbeiten, wie z. B. Volumenzähler mit festen oder beweglichen Meßkammerwänden, Volumenzähler mit Meßflügeln oder magnetisch-induktive Durchflußmesser sowie Durchflußmesser auf thermischer Grundlage. Mit besonderem Vorteil läßt sich jedoch die Erfindung bei Durchflußmeßanordnungen einsetzen, die als Durchflußmeßgerät ein Ultraschall-Strömungsmeßgerät enthalten. Bei einer derartigen Durchflußmeßanordnung ergibt sich nämlich eine Erweiterung des Meßbereichs. Dies ist darauf zurückzuführen, daß in einem Bereich der Reynoldszahl zwischen 2 320 und 3 000, in dem keine definierten Strömungsverhältnisse vorliegen, normalerweise eine Messung mit Ultraschall nur bedingt möglich ist. Im Rahmen der Erfindung wird die untere Grenze des Turbulenzbereichs herabgesetzt, wodurch der Meßbereich einer Durchflußmeßanordnung mit einem Ultraschall-Durchflußmeßgerät vergrößert wird.

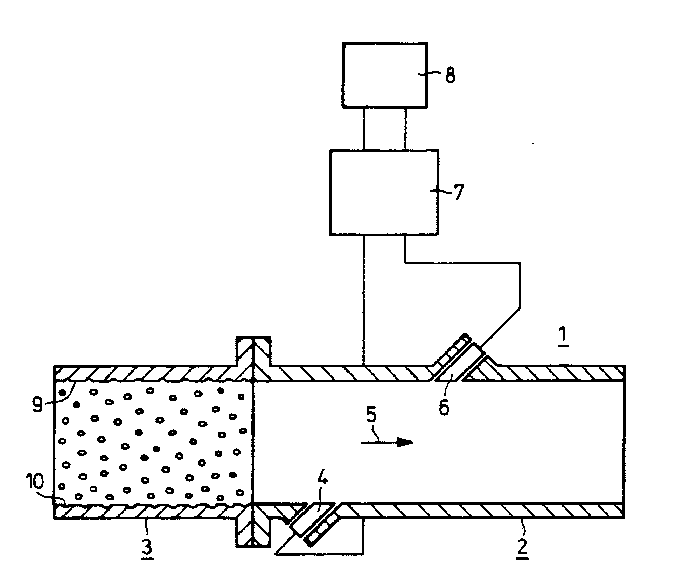

Zur Erläuterung der Erfindung ist in der Figur ein Ausführungsbeispiel der erfindungsgemäßen Durchflußmeßanordnung mit einem Ultraschall-Durchflußmeßgerät dargestellt.

Die gezeigte Durchflußmeßanordnung 1 enthält ein Ultraschall-Durchflußmeßgerät 2, dem in Form eines Rohrstücks 3 eine Einrichtung zur Erzeugung einer definierten Einlaufströmung in das Ultraschall-Durchflußmeßgerät 2 vorgeordnet ist.

Das Ultraschall-Durchflußmeßgerät enthält in dem dargestellten Ausführungsbeispiel einen Ultraschallgeber 4, dem in Strömungsrichtung (Pfeil 5) versetzt ein weiterer Ultraschallgeber 6 gegenüber angeordnet ist. Die beiden Ultraschallgeber 4 und 6 sind an einer Steuer- und Auswerteeinrichtung 7 angeschlossen, die in dem dargestellten Beispiel die Ultraschallgeber 4 und 6 so steuert, daß sie jeweils abwechselnd als Sender und Empfänger arbeiten. Der Steuer- und Auswerteeinrichtung 7 ist eine Meßeinrichtung 8 nachgeordnet, die mit einer analogen oder digitalen Anzeige für das durch das Ultraschall-Durchflußmeßgerät 2 hindurchgeflossene Medium versehen sein kann.

Das dem Ultraschall-Durchflußmeßgerät 2 vorgeordnete Rohrstück 3 ist über eine Flanschverbindung mit dem Gerät 2 verbunden. Das Rohrstück 3 weist eine besonders aufgerauhte Innenfläche 9 auf, die in dem dargestellten Ausführungsbeispiel dadurch erzielt ist, daß kleine Mulden 10 beliebig verteilt vorgesehen sind. Diese Mulden 10 erhöhen die Reibung eines durch das Rohrstück 3 strömenden Mediums und führen daher zwangsläufig zu Turbulenzen. Diese Turbulenzen verändern den Strömungsverlauf der in das Rohrstück 3 eintretenden Teilchen in dem zu messenden Medium und führen daher zu einer definierten Einlaufströmung, zu einer "definierten Turbulenz", die stets reproduzierbar ist.

## Patentansprüche

1. Durchflußmeßanordnung mit einem Durchflußmeßgerät und einer diesem vorgeordneten Einrichtung zur Erzeugung einer definierten Einlaufströmung in das Durchflußmeßgerät, **dadurch gekennzeichnet,** daß die Einrichtung zur Erzeugung einer definierten Einlaufströmung aus einem Rohrstück (3) mit einer derart aufgerauhten Innenfläche (10) besteht, daß deren Rauheit einige Prozente des lichten Durchmessers des Rohrstücks (3) beträgt.

2. Durchflußmeßanordnung nach Anspruch 1, **dadurch gekennzeichnet,** daß die aufgerauhte Innenfläche (10) von kleinen Mulden (10) in der Wand des Rohrstückes (3) gebildet ist.

## Claims

1. Flow-measuring arrangement having a flow-measuring device and an apparatus arranged in front of the latter for the production of a defined incoming flow into the flow-measuring device, characterized in that the apparatus for the production of a defined incoming flow consists of a pipe-piece (3) having an inner surface (10) which is roughened in such a way that its roughness amounts to a few percent of the inside diameter of the pipe-piece (3).

2. Flow-measuring arrangement according to claim 1, characterized in that the roughened inner surface (10) is formed from small depressions (10) in the wall of the pipe-piece (3).

## Revendications

1. Dispositif de mesure du débit comportant un débitmètre et un dispositif monté en amont de ce dernier et servant à produire un écoulement entrant défini dans le débitmètre, caractérisé par le fait que le dispositif servant à produire un écoulement entrant défini est constitué par un élément tubulaire (3) possédant une surface intérieure (10), rendue rugueuse de manière que sa rugosité soit égale à quelques pour cent du diamètre intérieur de la pièce tubulaire (3).

2. Dispositif de mesure de débit suivant la revendication 1, caractérisé par le fait que la surface intérieure rugueuse (10) est formée par la présence de petites cavités (10) dans la paroi de l'élément tubulaire (3).